**Europäisches Patentamt**

**European Patent Office**

**Office européen des brevets**

(11) Veröffentlichungsnummer: **0 183 098**
**A1**

# (12) EUROPÄISCHE PATENTANMELDUNG

(21) Anmeldenummer: **85114130.9**

(22) Anmeldetag: **06.11.85**

(51) Int. Cl.⁴: **H 04 M 1/64**

(30) Priorität: **16.11.84 DE 3441888**

(43) Veröffentlichungstag der Anmeldung:
**04.06.86 Patentblatt 86/23**

(84) Benannte Vertragsstaaten:
**AT BE CH DE FR GB LI NL**

(71) Anmelder: **Bayer Diagnostic + Electronic GmbH**
**Steinerstrasse 15**
**D-8000 München 70(DE)**

(72) Erfinder: **Sotke, Hartmut c/o Bayer Diag. + El. GmbH**
**Patentabteilung Steinerstrasse 15**
**D-8000 München 70(DE)**

(74) Vertreter: **Geyer, Ulrich F., Dr. Dipl.-Phys.**
**Steinerstrasse 15**
**D-8000 München 70(DE)**

(54) **Verfahren und Gerät zur Telefonanrufbeantwortung.**

(57) Bei dem Verfahren zur gleichzeitigen Abgabe eines Ansagetextes von einem Telefonanrufbeantworter an mehrere Anrufer bzw. mehrere Telefonleitungen sind zwei Ansagewerke mit zwei Aufzeichnungsträgern vorgesehen, wobei nach Ende des Ansagetextes auf einem Aufzeichnungsträger von einem auf den anderen Aufzeichnungsträger umgeschaltet wird, wobei der Aufzeichnungsträger, dessen Ansagetext beendet ist, während der Ansagetextabgabe durch den anderen Aufzeichnungsträger in seine Ausgangsstellung zurückkehrt. Dadurch werden für den Anrufer Wartezeiten vermieden, die sonst auftreten würden, wenn der Aufzeichnungsträger nach Ende des Ansagetextes in seine Ausgangsstellung zurückkehrt. Da weder ein Schnellvorlauf noch ein Schnellrücklauf erforderlich ist, ist ein schonender Betrieb sowohl hinsichtlich der Ansagewerke als auch der Tonträger gewährleistet. Ein gemäß diesem Verfahren arbeitendes Gerät zur Telefonanrufbeantwortung ist beschrieben.

Beschreibung.                        0183098

Die Erfindung betrifft ein Verfahren zur gleichzeitigen Abgabe eines Ansagetextes von einem mit
einem Ansagewerk angetriebenen Aufzeichnungsträger
eines Telefonanrufbeantworters an mehrere Anrufer, die
über einen oder mehrere an den Telefonanrufbeantworter
angeschlossenen Telefonleitungen gleichzeitig anrufen.
Die Erfindung betrifft weiterhin ein Gerät zur automatischen Telefonanrufbeantwortung mit einem Ansagewerk und einem Aufzeichnungsträger, wobei das Gerät einen oder mehrere Telefonanschlüsse aufweist und denselben Ansagetext gleichzeitig an mehrere Anrufer
abgibt.

Derartige Verfahren und Geräte zur Telefonanrufbeantwortung für die Abgabe von Ansagetexten gleichzeitig an mehrere Leitungen bzw. Anrufer sind bekannt.
Bei Eingang des ersten Anrufs wird das Ansagewerk
mit dem Aufzeichnungsträger in Funktion gesetzt und
mit der Abgabe des Ansagetextes begonnen. Bei Eingang
weiterer Anrufe werden die entsprechenden Telefonleitungen dann ebenfalls mit dem Ansagetext beaufschlagt, und der Teilnehmer, der später angerufen
hat, hört den Ansagetext erst von der Ansagestelle an,
die zum Zeitpunkt seines Anrufs gerade abgegeben wird.
Am Ende des Ansagetextes wird der Aufzeichnungsträger
durch entsprechende Steuerung des Ansagewerks wieder
in seine Ausgagnslage zurückgebracht. Das Ansageband
läuft dann von neuem ab.

Die Fernsprechteilnehmer, die später als der erste Anrufer angerufen haben, müssen, um auch den Anfang des
Ansagetextes abhören zu können, die Zeit, die der
Aufzeichnungsträger für den Rücklauf benötigt, abwarten  um den Textanfang zu hören.

Abgesehen von der Tatsache, daß es für einen Anrufer sehr unbefriedigend ist, warten zu müssen, bis er auch den Anfang des Textes hören kann, besteht eine große Wahrscheinlichkeit dafür, daß der Anrufer, da er während des Rücklaufs keinen Ansagetext hört, den Hörer wieder auflegt, entweder bewußt, weil er nicht länger warten will, oder unbewußt, weil er nicht damit rechnet, daß der Anfang des Ansagetextes nach einer Wartezeit nochmals abgegeben wird. Anrufbeantworterverfahren bzw. -geräte, bei denen eine derartige Wartezeit auftritt, sind daher sowohl für den Anrufer als auch für den Anzurufenden sehr unbefriedigend, da im letzteren Fall beispielsweise potentielle Kunden nicht die Nachricht erhalten, die der Betreiber des Anrufbeantworters den Anrufern übermitteln will.

Um die Rücklaufzeit des Aufzeichnungsträgers und damit die Wartezeit für die Anrufer zu verringern, wurden Ansagewerke verwendet, die einen schnellen Rücklauf haben. Abgesehen davon, daß dadurch die Wartezeit für die Anrufer nur verringert und nicht eliminiert werden kann, ist bei schnellem Rücklauf ein größerer Verschleiß und eine größere Störanfälligkeit gegeben und der Aufzeichnungsträger, beispielsweise ein Magnetband, ist stärkeren Belastungen und einer größeren Reißgefahr ausgesetzt. Darüberhinaus sind derartige Geräte sehr aufwendig und damit teuer.

Der Erfindung liegt daher die Aufgabe zugrunde, ein Verfahren und ein Gerät zur Abgabe eines Ansagetextes für mehrere Anrufer zu schaffen, bei dem am Ende des Ansagetextes bis zum Beginn des erneuten Abspielens keine bzw. nur eine kurze, für die Anrufer kaum zu bemerkende Zeitspanne verstreicht, sowie ein störungsfreier Betrieb und eine lange Lebensdauer des Geräts gewährleistet ist.

Ausgehend von den genannten Verfahren wird diese Aufgabe dadurch gelöst, daß am Ende des Ansagetextes automatisch ein zweites Ansagewerk mit einem zweiten Aufzeichnungsträger, der denselben Ansagetext wie der erste Aufzeichnungsträger aufweist, zur Abgabe des Ansagetextes an die mehreren Anrufer in Funktion gesetzt wird, und der erste Aufzeichnungsträger vom ersten Ansagewerk in seine Ausgangsstellung gebracht wird, während der Ansagetext vom zweiten Aufzeichnungsträger abgegeben wird.

Bei einem Gerät der eingangs genannten Art wird die Aufgabe dadurch gelöst, daß ein zweites Ansagewerk mit einem zweiten Aufzeichnungsträger vorgesehen ist, der denselben Ansagetext wie der erste Aufzeichnungsträger aufweist, und daß das zweite Ansagewerk am Ende des auf den ersten Aufzeichnungsträger gespeicherten Ansagetextes automatisch eingeschaltet wird, und daß der erste Aufzeichnungsträger während der Abgabe des Ansagetextes vom zweiten Aufzeichnungsträger an die Anrufer in die Ausgangslage gebracht wird.

Aufgrund der erfindungsgemäßen Verwendung zweier Ansagewerke und zweier Aufzeichnungsträger und der Umschaltung nach Ende des Ansagetextes von einem Aufzeichnungsträger auf den anderen Aufzeichnungsträger wird vermieden, daß die Anrufer auf den Anfang des Ansagetextes warten müssen, während der Aufzeichnungsträger in seine Ausgangsstellung gebracht wird. Die Anrufer werden daher weder auf eine Geduldsprobe gestellt, noch besteht die Gefahr, daß sie während dieser Wartezeit bewußt oder unbewußt in der Annahme auflegen, daß keine weitere Information abgegeben wird.

Während der Abgabe des Ansagetextes vom zweiten Aufzeichnungsträger kehrt der erste Aufzeichnungsträger in seine Ausgangsstellung zurück. Wenn der Ansagetext auf dem zweiten Tonträger beendet ist, erfolgt eine automatische Umschaltung zurück auf den ersten Aufzeichnungsträger, der sich wieder in seiner Ausgangsstellung befindet. Der komplette Ansagetext wird dann von neuem wiedergegeben. Erst dann, wenn kein Anruf mehr an einer der Leitungen vorliegt, wird dieser sich wiederholende Vorgang abgebrochen.

Da während der Zeit, während der eine Aufzeichnungsträger in seine Ausgangsstellung gebracht wird, der andere Aufzeichnungsträger den Ansagetext abgibt, besteht keine Notwendigkeit, den Aufzeichnungsträger schnell in seine Ausgangsstellung zurück zu bringen. Wenn der Aufzeichnungsträger ein Magnetband ist, ist es aufgrund der erfindungsgemäßen Merkmale daher nicht erforderlich, einen Schnellvorlauf bzw. einen Schnellrücklauf vorzusehen. Die Ansagewerke können daher einfach und kostengünstig hergestellt werden, und der Verschleiß bleibt gering, so daß die Reparaturanfälligkeit gering gehalten und die Lebensdauer wesentlich verlängert wird. Darüberhinaus sind die Aufzeichnungsträger, beispielsweise die Magnetbänder, aufgrund der stetigen, schonenden Betriebsweise mit kleinen Bandgeschwindigkeiten auch während des Laufes in die Ausgangsstellung keinen großen Belastungen ausgesetzt, wie dies bei schnellen Vorlauf- und Rücklaufgeschwindigkeiten der Fall ist. Auch die Aufzeichnungsträger haben daher eine lange Lebensdauer und die Gefahr eines Bandrisses ist praktisch ausgeschlossen.

Gemäß einer bevorzugten Ausführungsform der Erfindung ist der erste und/oder zweite Aufzeichnungsträger ein Endlos-Magnetband. Wenn das Gerät am Ende eines Ansagetextes von einem Ansagewerk auf das andere Ansagewerk umschaltet, kann das Endlos-Magnetband, das den Ansagetext nicht mehr abgibt, einfach bis in die Anfangsstellung weiterlaufen, ohne daß Einschalt- oder Ausschaltvorgänge, ein Rücklauf oder gar ein Schnellvorlauf bzw. ein Schnellrücklauf erforderlich ist. Gemäß einer vorteilhaften weiteren Ausgestaltung der Erfindung ist dies inbesondere dann gewährleistet, wenn der Ansagetext wenigstens 50% der Länge der Endlosbänder einnimmt. Die Verschleiß- und Störanfälligkeit sowohl der Laufwerke als auch der Bänder ist auf diese Weise denkbar gering. Eine weitere vorteilhafte Ausführungsform der Erfindung besteht darin, daß der Ansagetext synchron auf den ersten und den zweiten Aufzeichnungsträger aufgezeichnet wird, was mit einfachen schaltungstechnischen Maßnahmen bewirkt werden kann. Dadurch sind die nacheinander abzugebenden Ansagetexte identisch und der Benutzer eines solchen Geräts braucht den Ansagetext nur einmal aufzusprechen.

Für den Anschluß der Telefonleitungen gibt es zwei Möglichkeiten. Die eine Möglichkeit besteht darin, daß es sich um einen Hauptanschluß mit Mehrfachzugang handelt, bei dem die eingehenden Gespräche - sei es bei der Post oder beim Teilnehmer selbst - auf eine Leitung geschaltet werden. Dabei wählen alle Anrufer die gleiche Telefonnummer. Gemäß der anderen Möglichkeit sind Anschlüsse für mehrere Amtsleitungen vorgesehen, und alle Anrufer wählen unterschiedliche Telefonnummern. Das Aufschalten auf den laufenden Ansagetext erfolgt dann im Gerät. Das erfindungsgemäße Verfahren bzw. Gerät ist für beide Möglichkeiten anwendbar bzw. einsetzbar.

Compur-Electronic GmbH,  München, den 15.11.1984
München                           770/Gy/Ve/DP-790183098

Verfahren und Gerät zur Telefonanrufbeantwortung

Patentansprüche:

1. Verfahren zur gleichzeitigen Abgabe eines Ansagetextes von einem mit einem Ansagewerk angetriebenen
   Aufzeichnungsträger eines Telefonanrufbeantworters an
   mehrere Anrufer, die über eine oder mehrere an den Telefonanrufbeantworter angeschlossenen Telefonleitungen
   gleichzeitig anrufen, d a d u r c h   g e k e n n -
   z e i c h n e t ,   daß am Ende des Ansagetextes
   automatisch ein zweites Ansagewerk mit einem zweiten
   Aufzeichnungsträger, der denselben Ansagetext wie
   der erste Aufzeichnungsträger aufweist, zur Abgabe
   des Ansagetextes an die mehreren Anrufer in Funktion
   gesetzt wird, und der erste Aufzeichnungsträger vom
   ersten Ansagewerk in seine Ausgangsstellung gebracht
   wird, während der Ansagetext vom zweiten Aufzeichnungsträger abgegeben wird.

- 2 -

2. Verfahren nach Anspruch 1, dadurch gekennzeichnet,
daß am Ende des auf dem zweiten Aufzeichnungsträger
aufgezeichneten Ansagetextes automatisch das erste
Ansagewerk mit dem ersten Aufzeichnungsträger in
Funktion gesetzt und der zweite Aufzeichnungsträger
vom zweiten Ansagewerk während der Abgabe des Ansagetextes vom ersten Ansagewerk in seine Ausgangsstellung gebracht wird.

3. Verfahren nach Anspruch 1 oder 2, dadurch gekennzeichnet, daß der erste und/oder der zweite Aufzeichnungsträger ein Endlos-Magnetband ist.

4. Verfahren nach einem der Ansprüche 1 bis 3, dadurch
gekennzeichnet, daß der Ansagetext wenigstens 50%
der Aufzeichnungslänge des Endlosbandes einnimmt.

5. Verfahen nach einem der Ansprüche 1 bis 4, dadurch
gekennzeichnet, daß der Ansagetext synchron auf den
ersten und den zweiten Aufzeichnungsträger aufgezeichnet wird.

6. Gerät zur automatischen Telefonanrufbeantwortung
mit einem Ansagewerk und einem Aufzeichnungsträger,
wobei das Gerät einen oder mehrere Telefonanschlüsse
aufweist und denselben Ansagetext gleichzeitig an
mehrere Anrufer abgibt, dadurch gekennzeichnet, daß
ein zweites Ansagewerk mit einem zweiten Aufzeichnungsträger vorgesehen ist, der denselben Ansagetext wie
der erste Aufzeichnungsträger aufweist, daß das
zweite Ansagewerk am Ende des auf den ersten Aufzeichnungsträger gespeicherten Ansagetextes automatisch
eingeschaltet wird, und daß der erste Aufzeichnungsträger während der Abgabe des Ansagetextes vom zweiten
Aufzeichnungsträger an die Anrufer in die Ausgangslage
gebracht wird.

7.  Gerät nach Anspruch 6, dadurch gekennzeichnet,
    daß der erste und/oder der zweite Aufzeichnungsträger
    ein Endlos-Magnetband ist.

8.  Gerät nach Anspruch 6 oder 7, dadurch gekennzeichnet,
    daß der Ansagetext wenigstens 50% der Aufzeichnungslänge des Endlosbandes einnimmt.

9.  Gerät nach einem der Ansprüche 6 bis 8, dadurch gekennzeichnet, daß der Ansagetext synchron auf den ersten
    und den zweiten Aufzeichnungsträger aufgezeichnet wird.

**0183098**

Nummer der Anmeldung

EUROPÄISCHER RECHERCHENBERICHT

Europäisches
Patentamt

EP 85 11 4130

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | US-A-3 668 325 (THEIS)<br><br>* Spalte 2, Zeile 6 - Spalte 4, Zeile 25; Figuren * | 1,3,6, 7 | H 04 M 1/64 |
| | --- | | |
| A | US-A-4 356 351 (SHEFLER)<br>* Spalte 2, Zeile 16 - Spalte 4, Zeile 48; Figuren * | 1,6 | |
| | --- | | |
| A | FR-A-2 399 770 (PARDO)<br>* Seite 1, Zeile 1 - Seite 4, Zeile 22; Figuren * | 1,6 | |
| | ----- | | |

| | |
|---|---|
| | **RECHERCHIERTE SACHGEBIETE (Int. Cl.4)**<br><br>H 04 M |

Der vorliegende Recherchenbericht wurde für alle Patentansprüche erstellt

| Recherchenort<br>DEN HAAG | Abschlußdatum der Recherche<br>24-02-1986 | Prüfer<br>KEPPENS P.M.R. |
|---|---|---|